# EUROPÄISCHE PATENTANMELDUNG

(11) **EP 2 295 830 A2**
(43) Veröffentlichungstag der Anmeldung: **16.03.2011**
(21) Anmeldenummer: 10009058.8
(22) Anmeldetag: 01.09.2010
(51) Int. Cl.: F16F 15/26

(54) **Einrichtung zur Unterdrückung von Laufstörungen in Antriebssystemen mit Kurbeltrieb, insbesondere bei Sägegattern**

(30) Priorität: 15.09.2009 DE 102009041307
(71) Anmelder: Prisma Engineering GmbH, 8041 Graz-Liebenau (AT)
(72) Erfinder: Gschweitl, Ernst, Dipl.-Ing., 8200 Gleisdorf (AT)
(74) Vertreter: Grättinger Möhring von Poschinger Patentanwälte Partnerschaft

(57) **Zusammenfassung**

Die Erfindung betrifft eine Einrichtung zur Unterdrückung von Laufstörungen in Antriebssystemen mit Kurbeltrieb, insbesondere bei Sägegattern, wobei Verbindungselemente zwischen Hubelementen des Kurbeltriebs und den Störungen entgegenwirkenden Ausgleichselementen vorgesehen sind, wobei Ausgleichselemente einerseits zum Ausgleich der freien Lasten aufgrund der oszillierenden Massen des Systems (Schwingungsausgleich), andererseits zum Ausgleich der damit verbundenen inneren Lasten (Lastausgleich) vorgesehen sind, und wobei die Ausgleichselemente für den Schwingungsausgleich Verbindungselemente zur Übertragung der Hubbewegung des Kurbeltriebs auf dieser entgegenwirkende Ausgleichsmassen (7) und die Ausgleichselemente für den Lastausgleich Federelemente umfassen, welche den Lagerlasten des Kurbeltriebs entgegenwirkend, gegen ein gehäusefestes Bauteil des Antriebssystems abgestützt sind.

## Beschreibung

Die Erfindung betrifft Einrichtungen zur Unterdrückung von Laufstörungen in Antriebssystemen mit Kurbeltrieb, insbesondere bei Sägegattern, wobei Verbindungselemente zwischen Hubelementen des Kurbeltriebs und den Störungen entgegenwirkenden Ausgleichselementen vorgesehen sind.

Bei Kurbeltrieben wird eine Drehbewegung in eine hinund hergehende Bewegung umgesetzt, wobei diese Umsetzung auch in umgekehrter Richtung vorliegen kann. Dabei entstehen störende Massenkräfte erster und zweiter Ordnung sowie höherer Ordnung, welche jedoch weniger relevant sind.

Üblicherweise werden bei Hubkolben-Brennkraftmaschinen Massenkräfte erster und zweiter Ordnung in ihrer Wirkung mittels einer bekannten Einrichtung nach dem sogenannten Lanchester-Massenausgleich reduziert. Dabei sind für den Ausgleich erster Ordnung zwei gegenläufig rotierende Unwuchtwellen, die mit der Kurbeltriebsdrehzahl drehen, erforderlich; der Ausgleich der zweiten Ordnung erfordert zwei weitere gegenläufige Unwuchtwellen, welche mit der doppelten Kurbeltriebsdrehzahl drehen. Die vier Unwuchtwellen werden über eine Getriebeverbindung von der Kurbelwelle unter Inkaufnahme einer entsprechenden Verlustleistung angetrieben. Mit dem Lanchester-Massenausgleich können zwar die freien äußeren Lasten bzw. Kräfte und Momente im Sinne eines Schwingungsausgleichs ausgeglichen werden. Dabei bleiben aber die inneren Lasten bzw. Kräfte und Momente, welche durch die hin- und hergehende Bewegung erzeugt werden und den Kurbeltrieb belasten, unberücksichtigt.

Um einen Lastausgleich am Kurbeltrieb selbst, d.h. für die Kräfte und Momente, die an den Kurbelwellenhauptlagern und an den Pleuellagern angreifen, zu schaffen, ist es an einer Vernadelungsmaschine bekannt (GB 967042), das Nadelbrett an Luftfedern, welche in den Hoch- und Tiefpunkten der Bewegung Energie speichern, aufzuhängen, um den Kurbeltrieb zu entlasten. Luftfedern sind verhältnismäßig aufwändig und in ihrer Funktionssicherheit begrenzt.

Zum Reduzieren von störenden Schwingungen und Vibrationen an Kurbeltrieben ist es ferner bekannt (DE 3204163), Massenausgleichsschwingen einzusetzen, mittels welchen dem Kurbeltrieb entgegenwirkende Ausgleichsmassen im Sinne eines Schwingungsausgleichs bewegt werden.

In Verbindung mit einem hin- und hergehenden Tisch ist es ferner bekannt (JP 4201043), Gegengewichte über einen mit einem Antriebselement des Tisches gekoppelten Riementrieb zum Zwecke des Massenausgleichs zu bewegen. Die bekannten Einrichtungen zur Unterdrückung der genannten Laufstörungen in Antriebssystemen mit Kurbeltrieb befassen sich entweder mit Lösungen für den Lastausgleich zur Reduzierung innerer Lasten oder mit Lösungen für den Schwingungsausgleich zur Reduzierung äußerer Lasten an Kurbeltrieben, d.h. sie lösen nur unzureichend die mit Laufstörungen in Antriebssystemen mit Kurbeltrieb verbundenen Probleme.

Demgegenüber liegt der vorliegenden Erfindung die Aufgabe zugrunde, ein Ausgleichssystem zur Reduzierung innerer und äußerer Kräfte und Momente an Kurbeltrieben zu schaffen, welches weniger aufwendig ist als beispielsweise der bekannte Lanchester-Massenausgleich, welches wirksam ist sowohl zur Reduzierung der inneren als auch der äußeren Lasten an derartigen mechanischen Antriebssystemen und welches sich durch eine einfache und kompakte Bauweise auszeichnet und funktionssicher ist.

Diese Aufgabe wird an einer Einrichtung der eingangs genannten Art gemäß dem Kennzeichen von Patentanspruch 1 dadurch gelöst,
dass Ausgleichselemente einerseits zum Ausgleich der freien Lasten aufgrund der oszillierenden Massen des Systems (Schwingungsausgleich), andererseits zum Ausgleich der damit verbundenen inneren Lasten (Lastausgleich) vorgesehen sind,
dass die Ausgleichselemente für den Schwingungsausgleich Verbindungselemente zur Übertragung der Hubbewegung des Kurbeltriebs auf diese entgegenwirkende Ausgleichsmassen umfassen und
dass die Ausgleichselemente für den Lastausgleich Federelemente umfassen, welche den Lagerlasten des Kurbeltriebs entgegenwirkend, gegen ein gehäusefestes Bauteil des Antriebssystems abgestützt sind.

Auf diese Weise gelingt es, an Kurbeltrieben verschiedenster Art, z.B. von Einzylinder-, Zweizylinder- oder Mehrzylinder-Motoren und -Kompressoren oder an Antrieben von Erdölförderpumpen, Pressen, Sägegattern, Vernadelungsmaschinen und dergleichen, allen Aspekten auftretender Laufstörungen, welche durch den Kurbeltrieb bedingt sind, gerecht zu werden, nämlich sowohl einen Schwingungsausgleich als auch einen Lastausgleich zu schaffen.

Um die inneren Kräfte und Momente an Kurbeltrieben zu reduzieren, wird erfindungsgemäß der Einsatz von Federelementen vorgeschlagen, derart, dass die Federkraft jeweils der oszillierenden Kraft des Kurbeltriebs entgegenwirkt. Entsprechend diesen dynamischen Federkräften werden die auf Pleuellager und Kurbelhauptwellenlager in beiden Hubrichtungen einwirkenden Belastungen wirksam reduziert. Ferner werden die Massenkraft bedingten Drehungleichförmigkeiten an der Kurbelwelle entsprechend reduziert und es können auch die betriebsbedingten Kurbeltriebslasten besser verteilt werden, z.B. durch reduzierte Schnittkraft beim Schnitthub und entsprechend umgelagerte Schnittkraft beim Leerhub. Die Ankoppelung der Federelemente an den Kurbeltrieb kann dabei entweder direkt, z.B. am Kolben oder indirekt, z.B. über eine Schwinge erfolgen.

Als Federelemente eignen sich übliche Blatt-, Schrauboder Tellerfedern, insbesondere aber Drehfederstäbe bzw. sogenannte Torsionsfedern. Letztere sind günstig in der Anschaffung, funktionssicher und können sehr einfach mit einem Ende an gehäusefesten Schwenkachsen von schwingenden Lagerteilen befestigt werden, während das andere Ende gehäusefest fixiert ist. Um dabei einen optimalen Beitrag der Federkräfte zum Lastausgleich zu erzielen, kann es zweckmäßig sein, zwischen Schwenkachse und Torsionsfeder ein Getriebe einzubauen, welches den Schwenkwinkel mit dem Federhub abstimmt, z.B. letzteren reduziert im Interesse einer optimalen Nutzung der Federenergie bei schonender Beanspruchung der Torsionsfeder.

Für den Schwingungs- bzw. Vibrationsausgleich sind erfindungsgemäß Verbindungselemente vorgesehen, welche es ermöglichen, den bewegten Massen des Kurbeltriebs entgegenzuwirken und auf diese Weise für einen effektiven Schwingungsausgleich sorgen. Geeignete Verbindungselemente sind Gelenkhebel, welche jeweils zwischen einem Hubelement des Kurbeltriebs und einem Tragelemente für die Ausgleichsmasse angelenkt sind. Als Tragelement für Ausgleichsmassen kommen bewährte Schwingen oder Wippen zum Einsatz.

Eine besonders vorteilhafte Ausführungsform eines Verbindungselements umfasst ein um vertikal versetzte Umlenkrollen laufendes Bandelement, mit dessen einem Trum eine Ausgleichsmasse und mit dessen gegenläufigem Trum ein Hubelement des Kurbeltriebs verbunden ist. Ein derartiger Bandantrieb zeichnet sich aus durch ein geringes Gewicht und insbesondere durch eine platzsparende Bauweise, welche die kompakte Anbringung auch von großen oszillierenden Ausgleichsmassen ermöglicht und dabei mit einem niedrigen konstruktiven Aufwand auskommt. Als Bandelement eignen sich z.B. zugfeste flexible Flachriemen, Keilriemen, Zahnriemen, Ketten oder dergleichen.

In besonders vorteilhafter Weise ist die vorliegende Erfindung anwendbar in Verbindung mit Antrieben für Sägegatter, wobei zweckmäßig wenigstens zwei gegenläufige Schwingen mit Ausgleichsmassen vorgesehen sind, welche jeweils über einen Gelenkhebel mit dem beweglichen Gatter gelenkig verbunden sind.

Dem Lastausgleich dienen dabei bevorzugt ein- oder mehrere Federelemente als Zug-/Druckfedern, die sowohl Zug- als auch Druckkräfte aufnehmen und zwischen dem Gatter und einem gehäusefesten Bauteil angeordnet sind. Vorteilhaft sind die Federelemente jeweils als in ihrem mittleren Abschnitt geführte Spiralfedern ausgebildet.

Üblicherweise wird der Federkraft-Nulldurchgang im Bereich um ca. 90° vor bzw. nach OT (oberer Totpunkt) gewählt. Durch eine Verschiebung des Nulldurchgangs und/oder durch geeignete Dimensionierung der Feder können noch spezielle Anpassungen an die betriebsbedingten Kräfte erfolgen.

Auch für diesen Anwendungsfall ist wiederum der erfindungsgemäße Bandantrieb zum Zwecke des Lastausgleichs besonders vorteilhaft, wobei zu beiden Seiten des Gatters jeweils ein über eine obere und eine untere Umlenkrolle laufendes mit Gegengewichten bestücktes Bandelement vorgesehen ist, dessen dem Gatter zugewandtes Trum jeweils über ein Verbindungsglied mit dem Gatter fest verbunden ist und wobei zum Zwecke des Lastausgleichs wenigstens eine Umlenkrolle jedes Bandelements mittels einer Torsionsfeder gehäuseseitig abgestützt ist. Dabei kann an die Torsionsfeder ein Reduziergetriebe zu ihrer Betätigung angeschlossen sein, um den Drehwinkel der Torsionsfeder in Anpassung an die Hublänge des Gatters zu begrenzen.

Im Folgenden werden Ausführungsbeispiele der Erfindung anhand der Zeichnungen erläutert. Es zeigt:
- Fig. 1a,b: Ansicht und Draufsicht zu einem Sägegatter mit Ausgleichsmassen an Schwingen,
- Fig. 2a,b,c: Seitenansicht, Draufsicht und Frontansicht eines Sägegatters mit Bandantrieb für die Ausgleichsmassen,
- Fig. 3a,b,c: Ansichten gemäß Fig. 2a,b,c mit zusätzlichem Reduziergetriebe
- Fig. 4a,b: Ansicht und Draufsicht zu einem Einzylin- der-Kolbenkompressor mit Schwinge für den Massenausgleich,
- Fig 5a,b: Ansicht und Draufsicht zu einem Einzylin- der-Kolbenkompressor mit Bandantrieb für die Ausgleichsmassen,
- Fig 6a,b: Ansicht und Draufsicht zu einem Twin-Motor mit Schwingen für den Massenausgleich und
- Fig. 7a,b: Ansicht und Draufsicht zu einem Zweizylin- der-Motor mit gekreuzten Gelenkhebeln zur Betätigung einer Schwinge für den Massenausgleich.

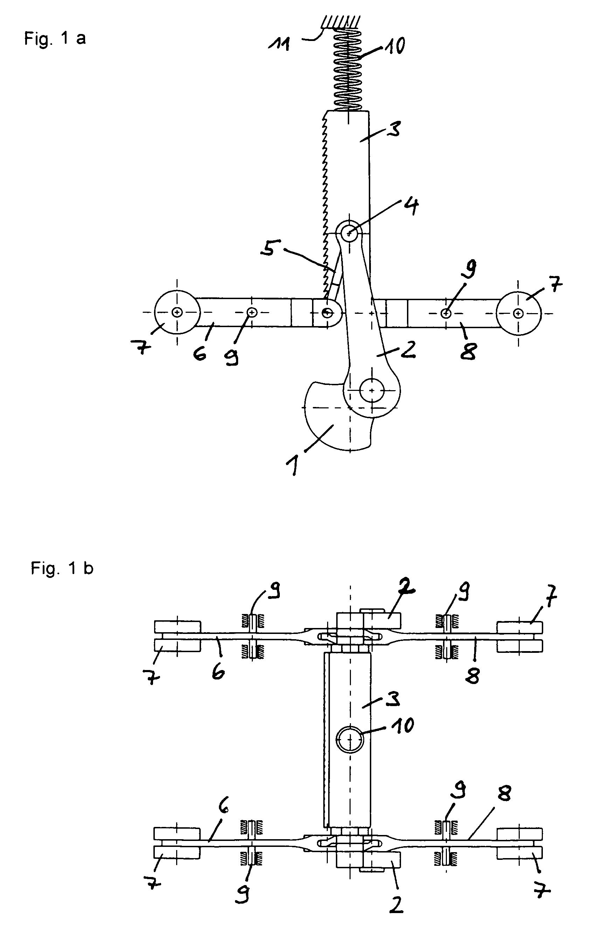

Ein Sägegatter ist gemäß Fig. 1a in der Ansicht und Fig. 1b in der Draufsicht auf die wesentlichen Bauelemente dargestellt. Mittels eines Kurbeltriebs aus Kurbelwelle 1 und Pleuel 2 wird ein bewegliches Gatter 3 auf und ab bewegt. Im Anlenkpunkt 4 des Pleuels 2 am Gatter 3 ist ein Gelenkhebel 5 als Verbindungselement zwischen dem Gatter 3 und einer Schwinge 6 angelenkt, an derem anderen Ende eine Ausgleichsmasse 7 befestigt ist. Eine gegenläufig angeordnete Schwinge 8 trägt eine entsprechende Ausgleichsmasse 7. Beide Schwingen 6,8 schwingen jeweils um eine gehäusefeste Schwenkachse 9, die sich jeweils etwa in mittlerer Länge jeder Schwinge befinden.

Ein Federelement in Form einer Spiralfeder 10, welche sowohl Zug- als auch Druckkräfte aufnehmen kann, ist mit den gegenüberliegenden Enden einerseits an der Oberseite des Gatters 3, andererseits an einem gehäusefesten Bauteil 11 befestigt.

In der Draufsicht gemäß Fig. 1b sind die gleichen Bauteile mit den in Fig. 1a verwendeten Bezugsziffern bezeichnet. Man erkennt, dass entsprechende Schwingen 6,8 auf beiden Seiten des Gatters 3 angeordnet sind um die Symmetrie des Massenausgleichs zu wahren.

Während die Ausgleichsmassen 7 für den Schwingungsausgleich sorgen, bewirkt die Spiralfeder 10 den Lastausgleich, d.h. die Reduzierung der Lagerlasten während der Hubbewegung des Sägegatters. Dabei geht es im Wesentlichen um die Lagerlasten des Kurbeltriebs einerseits in den Kurbelhauptwellenlagern, andererseits in den beiden Lagern der Pleuel 2.

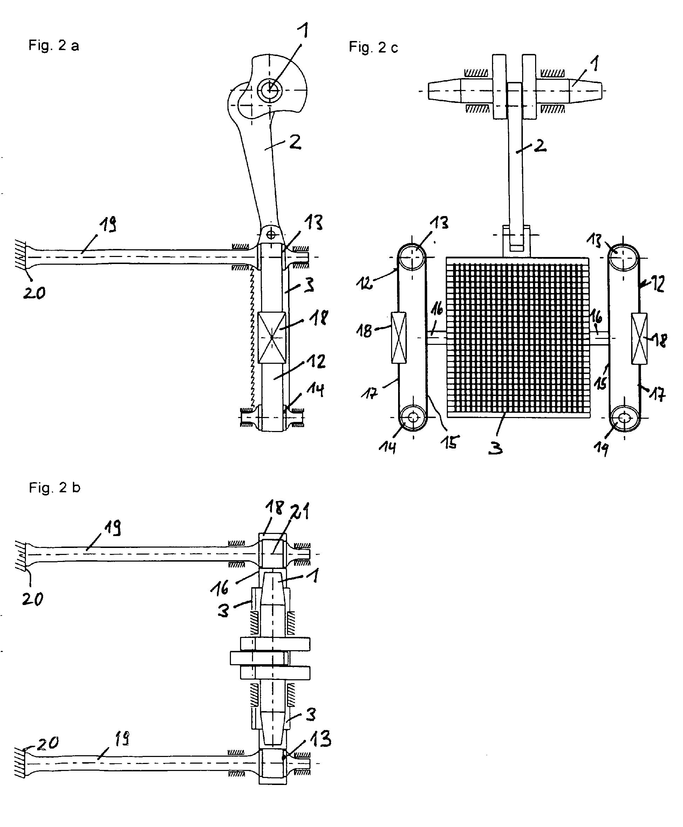

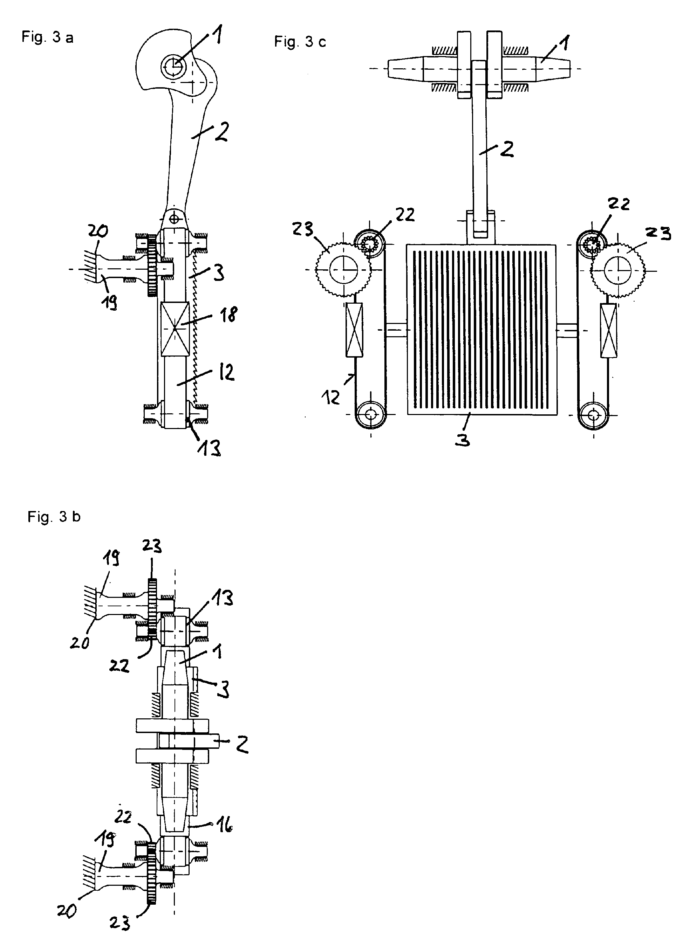

Eine andere Ausführungsform des Sägegatters betreffen die Figuren 2a bis 2c bzw. die Figuren 3a bis 3c. Letztere unterscheiden sich von der Ausführungsform gemäß den Figuren 2a bis 2c nur durch ein zusätzliches Reduziergetriebe, welches den Lastausgleich bewirkenden Torsionsfedern vorgeschaltet ist.

Bei den Sägegattern gemäß den Figuren 2a bis 2c bzw. 3a bis 3c dient als Tragelement für den Massenausgleich ein Bandelement 12 auf jeder Seite des Gatters 3. Jedes Bandelement 12 ist zwischen einer oberen Umlenkrolle 13 und einer unteren Umlenkrolle 14 umlaufend angeordnet. Das jeweils dem Gatter 3 zugewandete innere Trum 15 jedes Bandelements 12 ist über ein Verbindungsglied 16 mit dem Gatter 3 fest verbunden. Ein äußeres Trum 17 jedes Bandelements 12 trägt als Ausgleichsmasse ein Gegengewicht 18, welches entsprechend der Hubbewegung des Gatters 3 mit dem Bandelement 12 nach oben bzw. nach unten bewegt wird. Auch hier ist zum Zwecke des Massenausgleichs die zum Hubelement, vorliegend dem beweglichen Gatter 3 gegenläufige Bewegung des Gegengewichts 18 wesentlich, d.h. einer Aufwärtsbewegung des Gatters 3 entspricht eine Abwärtsbewegung der Gegengewichte 18 und umgekehrt.

Für den Antrieb des Gatters 3 sorgt wiederum ein Kurbeltrieb bestehend aus Kurbelwelle 1 und Pleuel 2.

Gemäß der Seitenansicht gemäß Fig. 2a und der Draufsicht gemäß Fig. 2b sind mit den oberen Umlenkrollen 13 jeweils eine Torsionsfeder 19 drehfest verbunden, deren anderes Ende an einem gehäusefesten Bauteil 20 befestigt ist. Die Torsionsfeder 19 schwingt entsprechend dem Antrieb des Bandelements 12 um die Drehachse 21 der oberen Umlenkrollen 13, so dass über die Bandelemente 12 entsprechende Gegenkräfte auf das Gatter 3 übertragen werden mit der Folge einer Reduzierung der Lagerlasten des Kurbeltriebs.

Da es in Anbetracht der erforderlichen Hublängen des Gatters 3 zweckmäßig sein kann, den Drehwinkel der Torsionsfeder 19 zu reduzieren, ist in der Ausführungsform gemäß den Figuren 3a bis 3c ein Reduziergetriebe gezeigt. Es besteht aus zwei Stirnrädern, nämlich einem Stirnrad 22 mit niedriger Zähnezahl und einem auf einer Torsionsfeder 19 sitzenden Stirnrad 23 mit höherer Zähnezahl, welche derart ineinander greifen, dass von dem angetriebenen kleinen Stirnrad 22 auf das Stirnrad 23 der Torsionsfeder 19 ein entsprechend der Untersetzung reduzierter Drehwinkel übertragen wird. Damit ist es möglich, die Verdrehung der Torsionsfeder 19 zu reduzieren bzw. eine kürzere Torsionsfeder zu wählen. Es versteht sich von selbst, dass die Torsionsfeder 19 unabhängig von Gatter 3 bzw. dem Bandelement 12 gehäusefest gelagert ist.

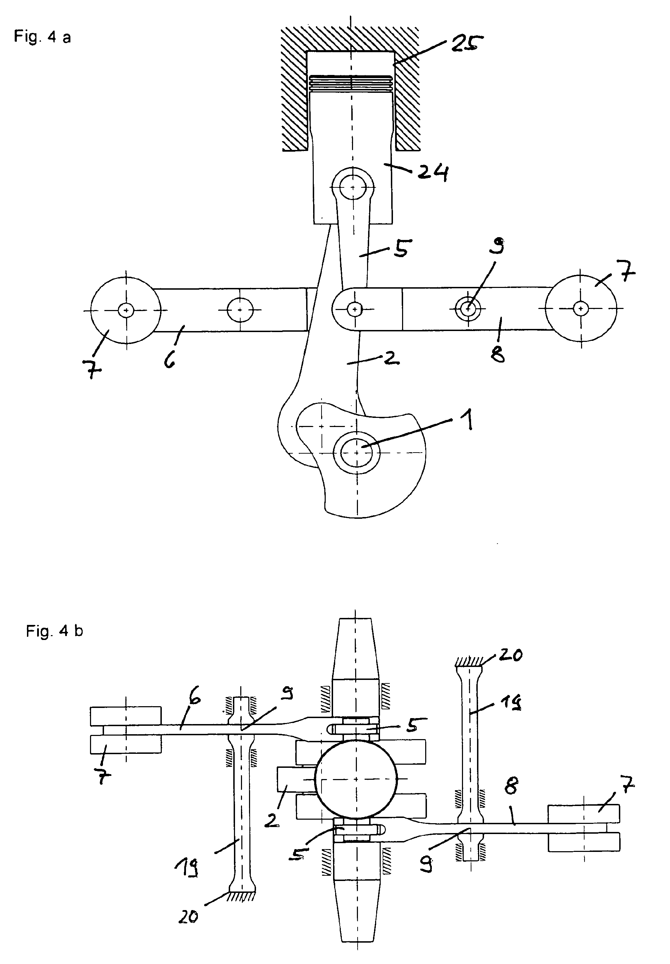

Die Figuren 4a und 4b zeigen einen Einzylinder-Kolbenkompressor umfassend einen Kurbeltrieb aus Kurbelwelle 1 und Pleuel 2 sowie einen Kolben 24 in einem Zylinder 25. Dem Massenausgleich dienen ähnlich dem Sägegatter gemäß den Figuren 1a, 1b Schwingen 6,8, an deren freien Enden jeweils eine Ausgleichsmasse 7 befestigt ist. Am Kolben 24 ist zusätzlich ein Gelenkhebel 5 angelenkt, welcher mit den inneren Enden der Schwingen 6,8 gelenkig verbunden ist. Gemäß Fig. 4b wird erkennbar, dass die Schwingen 6,8 auf gegenüberliegenden Seiten des Kolbens 24 angeordnet sind. Die Ausgleichsmassen 7 werden entgegen der Hubbewegung des Kolbens 24 auf- und abbewegt. Neben diesem Massenausgleich wird ein Lastausgleich dadurch erzielt, dass an beiden Schwenkachsen 9 der Schwingen 6,8 jeweils eine Torsionsfeder 19 angeschlossen ist, welche jeweils mit dem anderen Ende gehäusefest abgestützt ist. Entsprechend der Schwenkbewegung der Schwingen 6,8 werden die Torsionsfedern 19 entgegen der oszillierenden Bewegung des Kolbens 24 belastet, derart, dass deren Federkraft sich auf die Lager des Kurbeltriebs und die Lager an den Schwenkachsen 9 entlastend auswirkt.

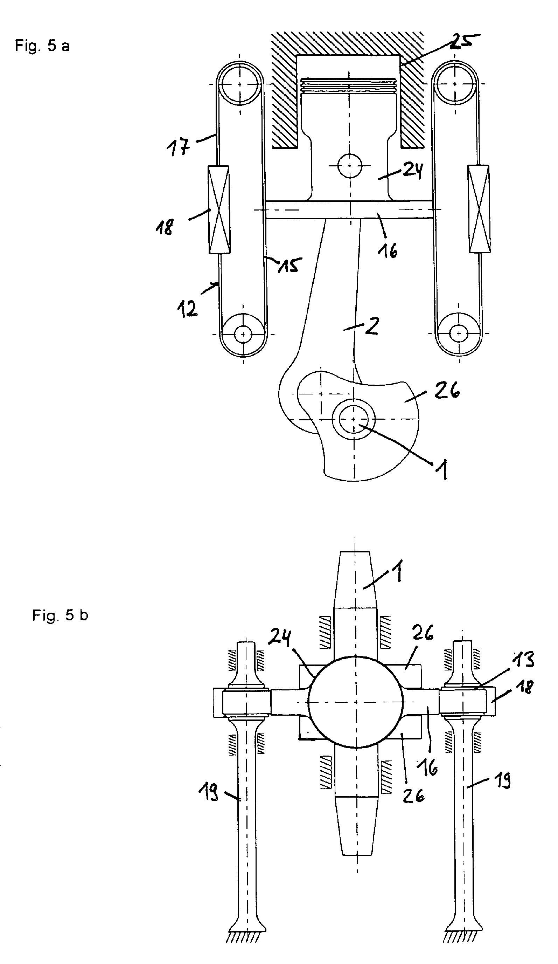

Eine andere Ausführungsform eines Einzylinder-Kolbenkompressors ist gemäß Figuren 5a und 5b in der Ansicht und in der Draufsicht dargestellt. Auch hier werden wiederum gleichartige Bauteile zur Ausführungsform gemäß den Figuren 4a und 4b mit gleichen Bezugsziffern bezeichnet. Ein Kolben 24 des Kompressors ist einem Zylinder 25 aufgenommen. Auf seiner Unterseite besitzt der Kolben 24 ein Verbindungsglied 16, welches mit beiden Enden jeweils am inneren Trum 15 eines Bandelements 12 befestigt ist. Auf jedem äußeren Trum 17 der Bandelemente 12 sitzt jeweils ein Gegengewicht 18, wie bereits zu den Figuren 2a bis 2c bzw. 3a bis 3c beschrieben. Der Kolben 24 wird angetrieben mittels eines Kurbeltriebs aus Kurbelwelle 1 und Pleuel 2. In Fig. 5b ist das Pleuel 2 durch den Kolben 24 abgedeckt; man erkennt aber die zu beiden Seiten des Pleuels auf der Kurbelwelle sitzenden Ausgleichsgewichte 26.

Dem Lastausgleich dienen wie bei Fig. 4b wiederum zwei Torsionsfedern 19, welche wie schon zu Fig. 2a bis c beschrieben an den oberen Umlenkrollen 13 der Bandelemente 12 drehfest angeschlossen sind.

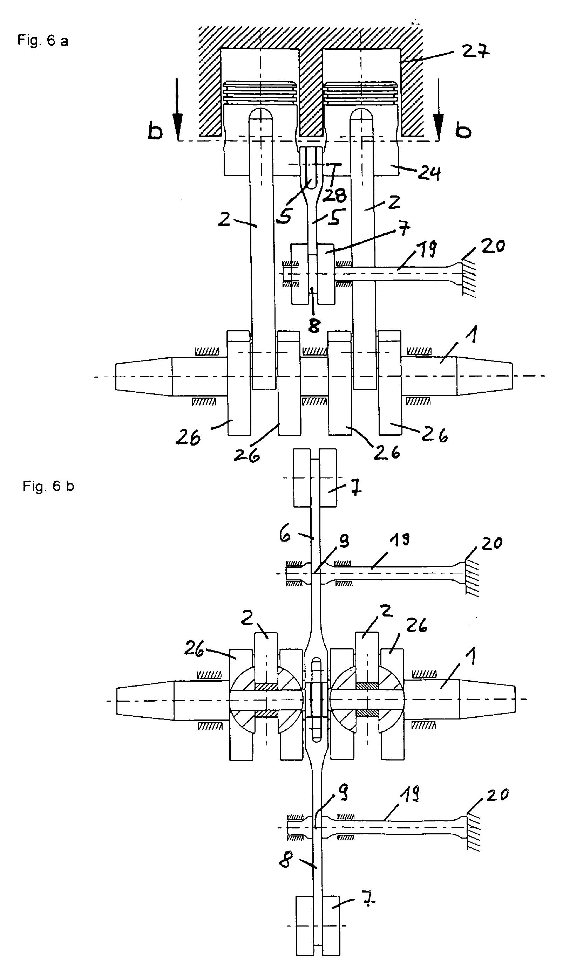

Gemäß Figuren 6a und 6b ist als weiteres Ausführungsbeispiel ein Twin-Motor dargestellt. Seine beiden Kolben 24 greifen in ein Zylindergehäuse 27 ein und sind in ihrem Mittelteil 28 mit gegenüberliegend ausgreifenden Schwingen 6,8 gelenkig verbunden. Die Schwenkachsen 9 beider Schwingen 6,8 sind jeweils drehfest mit einer Torsionsfeder 19 verbunden und dienen in oben beschriebener Weise dem Lastausgleich. Die beiden Schwingen 6,8 werden mittels Gelenkhebeln 5, welche an der Mittelgelenkachse 28 der beiden Kolben 24 angelenkt sind, betätigt.

Die Fig. 6b entspricht einem Schnitt gemäß Ebene b-b in Fig. 6a und zeigt dementsprechend die beiden Schwingen 6,8 sowie die beiden daran angeschlossenen Torsionsfedern 19. Entsprechend dieser Schnittdarstellung sind außerdem die beiden Kolben 24, die daran angeschlossenen Pleuel 2 und die Ausgleichsgewichte 26 der Kurbelwelle 1 erkennbar. An den äußeren Enden der Schwingen 6,8 sitzen, wie oben beschrieben, die Ausgleichsmassen 7.

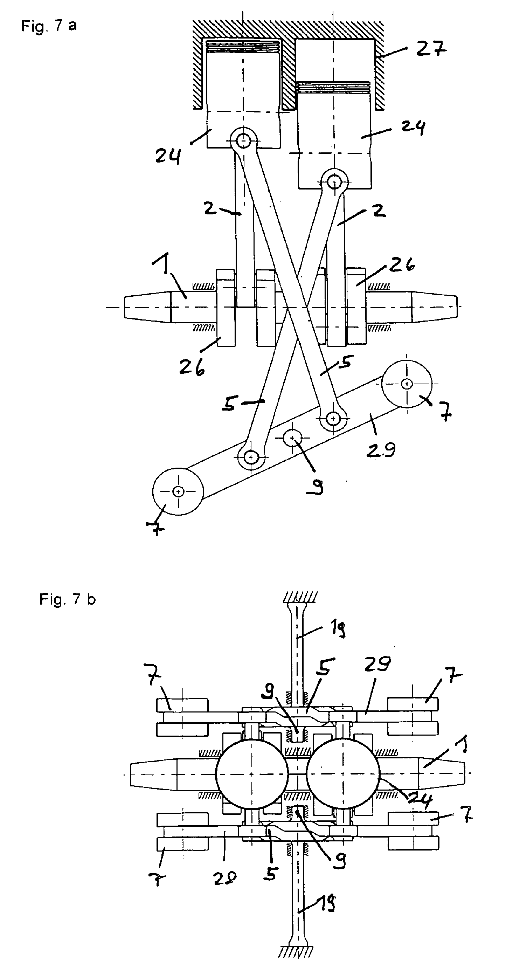

Als weiteres Ausführungsbeispiel zeigen Fig. 7a und 7b in der Ansicht und der Draufsicht einen Zweizylindermotor mit einem Kurbeltrieb, wie er bereits vorstehend mehrfach beschrieben wurde. Somit genügt es die gleichen Teilen mit den gleichen Bezugsziffern zu bezeichnen ohne näher darauf einzugehen, soweit der Kurbeltrieb betroffen ist. An den Kolben 24 des Zweizylindermotors ist jeweils ein Gelenkhebel 5 angelenkt, dessen anderes Ende mit einer Schwinge 29 verbunden ist, und zwar so, dass sich die beiden Gelenkhebel 5 kreuzen. Die Schwinge 29 schwingt um ihre gehäusefeste mittlere Schwenkachse 9 und bewegt zum Zwecke des Massenausgleichs entsprechend der Gegenbewegung der beiden Kolben 24 die an den beiden Enden der Schwinge 29 befestigten Ausgleichsmassen 7 gegenläufig auf und ab.

Wie schon vorstehend mehrfach beschrieben sind, wie in Fig. 7b erkennbar, die Schwingen 29 auf beiden Seiten des Kurbeltriebs angeordnet. In den Schwenkachsen 9 der Schwingen 29 ist jeweils eine Torsionsfeder 19 drehfest angeschlossen.

## Patentansprüche

1. Einrichtung zur Unterdrückung von Laufstörungen in Antriebssystemen mit Kurbeltrieb, insbesondere bei Sägegattern, wobei Verbindungselemente zwischen Hubelementen des Kurbeltriebs und den Störungen entgegenwirkenden Ausgleichselementen vorgesehen sind,
**dadurch gekennzeichnet,**
**dass** Ausgleichselemente einerseits zum Ausgleich der freien Lasten aufgrund der oszillierenden Massen des Systems (Schwingungsausgleich), andererseits zum Ausgleich der damit verbundenen inneren Lasten (Lastausgleich) vorgesehen sind,
**dass** die Ausgleichselemente für den Schwingungsausgleich Verbindungselemente zur Übertragung der Hubbewegung des Kurbeltriebs auf dieser entgegenwirkende Ausgleichsmassen (7) umfassen und
**dass** die Ausgleichselemente für den Lastausgleich Federelemente umfassen, welche den Lagerlasten des Kurbeltriebs entgegenwirkend, gegen ein gehäusefestes Bauteil des Antriebssystems abgestützt sind.

2. Einrichtung nach Anspruch 1, **dadurch gekennzeichnet,**
**dass** als Verbindungselement Gelenkhebel (5) vorgesehen sind, welche jeweils zwischen einem Hubelement und einem Tragelement für eine Ausgleichsmasse (7) angelenkt sind.

3. Einrichtung nach Anspruch 2, **dadurch gekennzeichnet,**
**dass** als Tragelement um ein gehäusefestes Lager verschwenkbare Schwingen (6,8,28)vorgesehen sind.

4. Einrichtung nach Anspruch 1, **dadurch gekennzeichnet,**
**dass** das Verbindungselement durch ein um vertikal versetzte Umlenkrollen (13,14) laufendes Bandelement (12) gebildet ist, mit dessen einem Trum (17) eine Ausgleichsmasse (18) und mit dessen gegenläufigem Trum (15) ein Hubelement verbunden ist.

5. Einrichtung nach Anspruch 1, **dadurch gekennzeichnet,**
**dass** als Federelement Torsionsfedern (19) mit Nulldurchgang vorgesehen sind, welche jeweils mit ihrem nicht gehäusefesten Ende direkt oder indirekt mit einer gehäusefesten Schwenkachse des Antriebssystems in Drehverbindung stehen.

6. Einrichtung nach Anspruch 5, **dadurch gekennzeichnet,**
**dass** die Torsionsfedern (19) jeweils mit der Schwenkachse (9) einer Schwinge (6,8,28) mit dieser verschwenkbar in Drehverbindung stehen.

7. Einrichtung nach Anspruch 5, **dadurch gekennzeichnet,**
**dass** die Torsionsfedern (19) jeweils mit dem Drehlager einer Umlenkrolle (13), mit dieser verschwenkbar, in Drehverbindung stehen.

8. Einrichtung nach Anspruch 5, **dadurch gekennzeichnet,**
**dass** zwischen einer Torsionsfeder (19) und einer Schwenkachse jeweils eine Getriebeverbindung zwischengeschaltet ist.

9. Sägegatter mit einer Einrichtung gemäß den Ansprüchen 1 bis 3, **dadurch gekennzeichnet,**
**dass** wenigstens zwei gegenläufige Schwingen (6,8) mit Ausgleichsmassen (7) vorgesehen sind, welche jeweils über einen Gelenkhebel (5) mit dem beweglichen Gatter (3) gelenkig verbunden sind.

10. Sägegatter nach Anspruch 9, **dadurch gekennzeichnet,**
**dass** ein- oder mehrere Federelemente als Zug-/ Druckfedern zwischen dem Gatter (3) und einem gehäusefesten Bauteil angeordnet sind.

11. Sägegatter nach Anspruch 10, **dadurch gekennzeichnet,**
**dass** die Federelemente jeweils in ihrem mittleren Abschnitt in einer Rohrführung geführte Spiralfedern sind.

12. Sägegatter mit einer Einrichtung gemäß den Ansprüchen 1 und 4, **dadurch gekennzeichnet,**
**dass** zu beiden Seiten des Gatters (3) jeweils ein über eine obere (13) und eine untere Umlenkrolle (14) laufendes mit Ausgleichsmassen (18) bestücktes Bandelement (12) vorgesehen ist, dessen dem Gatter (3) zugewandtes Trum (15) jeweils über ein Verbindungsglied (16) mit dem Gatter (3) fest verbunden ist.

13. Sägegatter nach Anspruch 12, **dadurch gekennzeichnet,**
**dass** wenigstens eine Umlenkrolle (13) jedes Bandelements (12) mittels einer Torsionsfeder (19) gehäuseseitig abgestützt ist.

14. Sägegatter nach Anspruch 13, **dadurch gekennzeichnet,**
**dass** an die Torsionsfeder (19) ein Reduziergetriebe zu ihrer Betätigung angeschlossen ist.
